# FASCICULE DE BREVET EUROPEEN

(11) **EP 3 877 146 B1**
(45) Date de publication et mention de la délivrance du brevet: **28.09.2022**
(21) Numéro de dépôt: 19816833.8
(22) Date de dépôt: 30.10.2019
(51) Int. Cl.: B29C 49/62, B29C 49/78, B29C 49/06, B29C 49/42, B29K 67/00, B29L 31/00

(54) **PROCEDE DE FABRICATION D'UN RECIPIENT EN MATIERE PLASTIQUE**
VERFAHREN ZUR HERSTELLUNG EINES KUNSTSTOFFBEHÄLTERS
METHOD FOR PRODUCING A PLASTIC CONTAINER

(30) Priorité: 08.11.2018 FR 1871411
(43) Date de publication de la demande: 15.09.2021
(73) Titulaire: Sidel Participations, 76930 Octeville-sur-Mer (FR)
(72) Inventeur: DERRIEN, Mikaël, 76930 Octeville-sur-mer (FR); PENET, Laurent, 76930 Octeville-sur-mer (FR)
(74) Mandataire: Sidel Group
(86) Numéro de dépôt international: PCT/FR2019/052576
(87) Numéro de publication internationale: WO 2020/094947

(56) Documents cités:
- DE-U1-202009 006 684
- US-A1- 2010 301 523
- US-A1- 2015 174 813
- US-A1- 2015 290 867
- US-A1- 2016 332 357

## Description

Le domaine de l'invention est celui de la fabrication de récipients en matière plastique à partir d'ébauches.

Plus précisément, l'invention concerne un procédé de fabrication, dans unité de fabrication avec au moins un moule, de récipients en matière plastique présentant de bonnes propriétés mécaniques, comprenant une phase de soufflage ou d'étirage soufflage de préformes dans lesdits moules.

Les documents US2015/290867A1, US2015/174813A1 et US2010/301523A1 décrivent des procédés apparentés de l'art antérieur.

Qu'il s'agisse d'une préforme ou d'un récipient intermédiaire ayant déjà subi une opération de préformage, une ébauche comprend un corps, généralement cylindrique de révolution, un col qui constitue le buvant du récipient à former, et un fond qui ferme le corps à l'opposé du col.

La technique classique de fabrication consiste à introduire l'ébauche, préalablement chauffée à une température supérieure à la température de transition vitreuse de la matière (environ 76°C dans le cas duPET), dans un moule muni d'une paroi définissant une cavité à l'empreinte du récipient, et à injecter dans l'ébauche, par le col, un gaz (généralement de l'air), sous pression pour plaquer la matière contre la paroi du moule.

La fabrication comprend une séquence de formage (par soufflage ou étirage-soufflage) qui inclut en général une phase préalable, dite de pré-soufflage, lors de laquelle le gaz est injecté, via une tuyère, à une pression de pré-soufflage relativement basse (ordinairement inférieure ou égale à 15 bars), suivie par une phase de soufflage, lors de laquelle du gaz est injecté à une pression de soufflage élevée (ordinairement supérieure ou égale à 20 bars et pouvant atteindre 40 bars). La séquence de formage est suivie par une phase de dégazage, consistant à évacuer le gaz contenu à l'intérieur du récipient, pour que sa pression interne descende à la pression atmosphérique

Sous l'effet de la pression, la matière ramollie par la chauffe forme une bulle qui enfle et se développe à la fois suivant une direction axiale, parallèle à l'axe principal du moule, et suivant une direction radiale, perpendiculaire à l'axe du moule.

Afin d'éviter tout désaxement du récipient (ce qui permet d'assurer une bonne répartition de la matière constitutive de l'ébauche dans le récipient fini), l'étirage axial de l'ébauche peut être forcé au moyen d'une tige, appelée tige d'étirage ou d'élongation, déplaçable axialement dans le moule pendant le pré-soufflage et/ou le soufflage. On parle dans ce cas de fabrication par étirage-soufflage. Cette tige comprend une extrémité distale venant repousser le fond de l'ébauche jusqu'à venir le plaquer contre un fond de moule à l'empreinte du fond du récipient. Dans la suite de la description, le terme "soufflage" s'appliquera indifféremment au simple soufflage ou à l'étirage-soufflage.

Il est rappelé que la fabrication peut être réalisée dans des moules dits "froids" : il s'agit de moules tempérés (maintenus à température ambiante) ou refroidis par circulation d'un fluide caloporteur (eau réfrigérée). Elle peut encore être réalisée dans des moules dits "chauds" : il s'agit de moules chauffés par des éléments chauffants ou par circulation d'un fluide chaud (huile chaude par exemple).

Les moules froids sont utilisés pour les applications dites standards où les récipients ne sont pas soumis à des conditions sévères d'utilisation, alors que les moules chauffés sont utilisés pour fabriquer des récipients qui sont soumis à des conditions plus sévères d'utilisation (remplissage à chaud).

Lors de la fabrication avec des moules froids, lorsque la prise d'empreinte est terminée (le temps nécessaire à la prise d'empreinte est déterminé lors du paramétrage de l'unité de fabrication), la phase de soufflage s'achève en stoppant l'injection du gaz de soufflage à haute pression et la phase de dégazage est alors initiée pour évacuer le gaz sous pression à l'intérieur du récipient formé, jusqu'à ce que l'intérieur du récipient atteigne une pression égale à la pression atmosphérique. La séquence de formage comprend donc la phase de présoufflage, avec l'injection du gaz de pré-soufflage, puis la phase de soufflage, avec l'injection du gaz de soufflage à haute pression. La séquence de formage est suivie par la phase de dégazage.

Lors de la fabrication avec des moules chauds, la phase de soufflage peut être décomposée en deux sous-phases : une première sous-phase, dite de soufflage, lors de laquelle l'injection du gaz de soufflage à haute pression est effective et une seconde sous-phase, dite de balayage, survenant lorsque la prise d'empreinte provoquée par la haute pression est terminée, lors de laquelle un apport de gaz à haute pression est maintenu, mais il est provoqué un échappement contrôlé de façon que les parois des récipients se décollent légèrement des parois des moules. Le balayage est réalisé en provoquant ledit échappement contrôlé du gaz contenu dans le récipient, pendant que du gaz sous pression est toujours injecté, non seulement par la tuyère de soufflage mais encore par un ou plusieurs trous ménagés dans la tige d'étirage, afin de maintenir une pression résiduelle significative à l'intérieur du récipient (généralement comprise entre 8 bars et 12 bars). Après le balayage, une phase de dégazage est initiée pour évacuer le gaz sous pression à l'intérieur du récipient formé, jusqu'à ce que l'intérieur du récipient atteigne une pression égale à la pression atmosphérique. Généralement, la phase de dégazage est initiée lorsque la pression dans le récipient se situe autour de 10 bars. Dans ce cas, la séquence de formage comprend donc la phase de présoufflage, avec l'injection du gaz de pré-soufflage, puis la phase de soufflage, avec ses deux sous-phases. La séquence de formage est suivie par la phase de dégazage. Un procédé de fabrication avec des moules chauds permet d'obtenir une thermofixation de la matière constitutive du récipient et une relaxation des contraintes induites lors de l'étirage et du soufflage. Pour les récipients remplis à chaud, la température des moules est supérieure à la température de remplissage, de sorte que, lorsque les récipients sont remplis à une température moindre, leur matière constitutive ne se déforme pas du fait qu'elle a déjà été soumise à une température plus élevée.

Qu'il s'agisse de moules froids ou chauds, la phase de dégazage est réalisée au travers de la tuyère qui comprend un circuit de dégazage permettant de diriger le gaz sous pression depuis l'intérieur du récipient vers l'extérieur de l'unité de fabrication en aboutissant sur des silencieux d'échappement. On rappelle que le dégazage consiste à faire chuter la pression d'une valeur supérieure à 20 bars (et pouvant atteindre 40 bars) jusqu'à la pression atmosphérique. Le différentiel est très important et est la cause d'un bruit très important si des précautions ne sont pas prises.

Avantageusement, une phase de récupération du gaz sous pression peut être prévue à des fins de recyclage et d'écologie. De la sorte, le gaz sous pression ainsi récupéré peut être par exemple réutilisé lors de la phase de pré-soufflage et/ou une partie de la phase de soufflage mise en oeuvre lors de la fabrication d'un récipient suivant ; il peut encore être récupéré pour entraîner ou aider à l'entraînement d'organes de la machine de fabrication (vérins, actionneurs, etc.).

La phase de dégazage d'un récipient formé dans un moule froid peut être décomposée en deux sous-phases successives.

Lors de la première sous-phase, survient une diminution importante de la pression dans le récipient en un court laps de temps. Plus précisément, la pression chute de la pression restant dans le récipient en fin de séquence de formage (comprise entre environ 20 bars et 40 bars) à environ 10 bars en quelques millisecondes. Par exemple, dans un procédé à moule froid, pour un récipient d'une capacité de 2 litres formé avec une pression de soufflage de 40 bars, la pression tombe de 40 bars à environ 10 bars en moins de 100 millisecondes.

Lors de la seconde sous-phase, la pression dans le récipient continue à décroître jusqu'à atteindre la pression atmosphérique. Cette seconde sous-phase peut être plus longue que la première sous-phase, même lorsque la variation de pression lors de cette seconde sous-phase est inférieure à celle qui survient lors de la première.

En d'autres termes, la diminution de la pression dans le récipient lors de la phase de dégazage n'est pas linéaire : la seconde sous-phase, qui permet l'atteinte de la pression atmosphérique, à partir du moment où la pression résiduelle est inférieure ou égale à 10 bars, est relativement longue comparativement à la première, lors de laquelle la pression dans le récipient chute depuis la valeur de la pression en fin de séquence de formage jusqu'à 10 bars (la durée de la seconde sous-phase peut être supérieure à 175 millisecondes pour un récipient d'une capacité de 2 litres). Il faut d'ailleurs noter que dans le cas où la phase de dégazage comporte des phases de récupération du gaz, cette phase de dégazage est ponctuée de petits paliers augmentant encore la durée de dégazage.

Comme indiqué précédemment, dans le cas de récipients formés dans un moule chaud, la phase de dégazage, qui suit la sous-phase de balayage, est initiée alors que la pression résiduelle dans le récipient est de l'ordre de 8 à 12 bars. Aussi, cette phase de dégazage est-elle comparable à la seconde sous-phase de dégazage qui survient dans le cas des moules froids.

Par ailleurs, pour obtenir un récipient présentant de bonnes propriétés mécaniques, on rappelle qu'il est nécessaire que la matière constitutive de l'ébauche soit maintenue au contact du moule par le gaz sous pression le plus longtemps possible.

Or, un tel maintien en contact ne peut pas durer indéfiniment notamment pour répondre aux contraintes des cadences de production qui sont en constante augmentation. En outre, la réduction des pressions de soufflage pour des raisons environnementales (qui implique l'emploi de compresseurs moins énergivores) a pour conséquence de réduire le temps de maintien du récipient au pic de pression maximal et donc le temps de contact entre la matière et le moule.

Dans ce contexte, les fabricants de récipients doivent répondre à une demande de plus en plus grande en termes de nombre d'unités à produire, tout en conservant la qualité des récipients, tout en réduisant les consommations d'énergie associées.

Pour cela, la solution idéale serait de proposer des temps de cycle de fabrication les plus courts possibles. Toutefois, la réduction du temps de cycle de fabrication pourrait entraîner un risque de dégradation en matière de qualité. En effet, une réduction du temps de cycle s'opère généralement par une diminution du temps de maintien de la matière contre les parois du moule, couplée à une réduction de la pression de soufflage. Or, l'association de la réduction du temps de maintien sous pression avec une baisse de la pression de soufflage peut aboutir à une mauvaise formation des emballages (notamment au niveau de leurs parties les plus complexes à former), ce qui, outre l'aspect esthétique, peut aussi impacter négativement la résistance mécanique des emballages. Afin de conserver un temps de cycle qui pourrait être qualifié de standard tout en répondant à la demande croissante, il peut également être possible d'augmenter le nombre d'unités de fabrication, mais cela représente un coût important et demande un espace de grandes dimensions. Il en résulte alors un bilan négatif en termes d'écologie puisque les ressources nécessaires à la fabrication des récipients (gaz sous pression et électricité notamment) sont accrues. Cela va alors à l'encontre de la tendance suivie par les fabricants de récipients qui souhaitent rendre leurs unités de fabrication moins énergivores et plus respectueuses de l'environnement.

L'invention a notamment pour objectif de pallier les inconvénients de l'art antérieur, tout en étant applicable aux procédés mettant en œuvre des moules froids, comme des moules chauds.

Plus précisément, l'invention a pour objectif de proposer un procédé de fabrication d'un récipient pouvant recourir à une pression de soufflage inférieure à l'art antérieur tout en conservant le niveau de qualité des récipients ainsi obtenus.

L'invention a également pour objectif de fournir un tel procédé permettant un maintien de la matière plus long sur les parois du moule que dans l'art antérieur, sans augmenter le temps de cycle total.

L'invention a en outre pour objectif de fournir un tel procédé adaptable sur des unités de fabrication déjà existantes.

Ces objectifs, ainsi que d'autres qui apparaîtront par la suite, sont atteints grâce à l'invention qui a pour objet un procédé de fabrication d'un récipient par soufflage à partir d'une préforme en matière plastique au sein d'une unité de fabrication, l'unité de fabrication comprenant un moule définissant une empreinte du récipient à former et une tuyère destinée à fermer hermétiquement le moule, le procédé de fabrication comprenant :
- une séquence de formage par soufflage, avec une phase de soufflage comprenant au moins l'injection et le maintien d'un gaz sous pression dans la préforme, par la tuyère, afin de déformer la préforme jusqu'à épouser l'empreinte du moule et obtenir un récipient ;
- une phase de dégazage du récipient formé, consistant à en faire sortir le gaz contenu dans le récipient à la fin de la séquence de formage, afin de mettre l'intérieur du récipient à la pression atmosphérique ;
caractérisé en ce que lors de la phase de dégazage, il est provoqué un écartement de la tuyère par rapport au moule afin de rompre la fermeture hermétique pour mettre en communication fluidique directe l'intérieur du récipient avec l'atmosphère, l'écartement de la tuyère étant initié :
- après le commencement de la phase de dégazage, lorsque la pression à l'intérieur du récipient a chuté et a atteint une pression prédéterminée, inférieure à la pression en fin de séquence de formage et comprise entre 14 et 3 bars.
   ou
- après achèvement de la séquence de formage, et à un instant prédéterminé survenant dans un intervalle de temps compris entre 0 et 200 ms après l'arrêt de l'injection de gaz dans le récipient.

L'écartement de la tuyère par rapport au moule assure une mise en communication fluidique directe entre l'intérieur du récipient formé et l'atmosphère. En conséquence, la chute de pression dans le récipient formé se fait quasi instantanément sans que l'échappement du gaz en fin de séquence de formage ne soit perturbé ou ralenti par aucun circuit ou organe tel qu'un silencieux d'échappement. Ainsi, en comparant les phénomènes entre deux récipients identiques formés avec un même niveau de haute pression, l'un en mettant en œuvre l'invention, l'autre en mettant en œuvre un procédé antérieur, on constate que l'écartement de la tuyère par rapport au moule permet de réduire la durée de la phase de dégazage de moitié au moins par rapport aux procédés de l'art antérieur.

Ce dégazage rapide procure divers avantages.
- Dans le cas de moules froids, il autorise de maintenir la haute pression de soufflage plus longtemps avant de provoquer le dégazage, sans que la cadence de production ne soit affectée comparativement à l'art antérieur.
- Toujours dans le cas de moules froids, le refroidissement est favorisé du fait que la matière est plus longtemps au contact des moules qui sont régulés thermiquement à une température inférieure à la température de la matière plastique en fin de soufflage.
- Dans le cas de moules chauds, la durée globale de la séquence de formage peut être augmentée, en augmentant la durée de la sous-phase de soufflage et/ou celle de la sous-phase de balayage. Ceci permet dans tous les cas d'augmenter le temps de contact (ou de maintien) de chaque récipient avec son moule de fabrication et en conséquence d'en favoriser la prise d'empreinte et, en définitive, d'améliorer les propriétés mécaniques et thermiques des récipients obtenus. En effet, la pression interne à laquelle est soumis le récipient en cours de fabrication étant maintenue plus longtemps, la matière a le temps de bien se répartir et épouser la forme du moule.
- La tenue mécanique des récipients est favorisée car chaque récipient est dessiné de façon optimisée non seulement pour des raisons d'esthétique, mais encore pour des raisons techniques. Meilleure est la prise d'empreinte, mieux le récipient répondra au cahier des charges pour lequel il a été conçu. Le procédé permet d'obtenir des formes complexes d'excellente qualité, qu'il s'agisse d'utiliser des moules froids ou des moules chauds.
- En outre, puisque la détente du gaz dans le récipient lors du dégazage est beaucoup plus rapide avec l'invention, l'effet de refroidissement lié à la détente est amélioré par rapport aux mises en œuvre de l'art antérieur. La tenue mécanique des récipients en est améliorée, car ils sortent des moules davantage refroidis et rigidifiés. Il en résulte une réduction notable des phénomènes de rétreint de la matière lorsque les récipients sont sortis des moules.
- Enfin, une telle phase de dégazage permet de réduire, à cadence et qualité de récipient identique, la consommation énergétique de l'unité de fabrication d'environ 10% par rapport à un procédé classique, notamment en termes de consommation de gaz injecté. En effet, le maintien prolongé de la matière du récipient contre le moule autorise l'emploi d'une haute pression de soufflage moindre comparativement à l'art antérieur, sans altérer, voire en l'améliorant, la qualité du récipient.

Dans ce mode de fonctionnement, il est évident que l'on ne peut intégrer de phase de récupération du gaz durant le dégazage, mais il faut savoir que dans de plus en plus de cas, la réduction de la pression de soufflage que permettent les améliorations techniques, notamment lorsque celles-ci sont aux alentours de 20 bars ou moins, rendent de plus en plus caduque la mise en œuvre d'une phase de récupération.

Selon d'autres caractéristiques, prises seules ou en combinaison :
- La séquence de formage par soufflage est accompagnée d'un étirage axial de la préforme ;
- le procédé est mis en œuvre dans un moule chaud et comporte une sous-phase de balayage qui survient au cours de la phase de soufflage immédiatement avant le dégazage et au cours de laquelle un échappement contrôlé de gaz est provoqué et un gaz de balayage est injecté dans le récipient et à l'issue de laquelle il subsiste dans le récipient une pression comprise entre 8 et 12 bars, et l'écartement de la tuyère est initié immédiatement à la fin de la sous-phase de dégazage, à l'arrêt de l'injection de gaz de balayage dans le récipient.
- l'écartement de la tuyère par rapport au moule est initié durant la phase de dégazage du récipient après que le dégazage ait débuté par un circuit de dégazage de l'unité de fabrication lorsque la pression prédéterminée dans le récipient formé atteint la valeur d'une consigne de pression ;
- la consigne de pression pilotant l'écartement de la tuyère par rapport au moule est fixée entre 14 et 3bars ;
- la consigne de pression pilotant l'écartement de la tuyère est déterminée par un opérateur de l'unité de fabrication, en d'autres termes une personne en charge de son pilotage ;
- la consigne de pression pilotant l'écartement de la tuyère est déterminée par un automate de l'unité de fabrication, en fonction de données de pression et du volume des articles produit, ou d'une mesure de bruit ;
- l'écartement de la tuyère par rapport au moule est piloté après achèvement de la séquence de formage et après l'arrêt de l'injection, par une consigne de temps ;
- la consigne de temps pilotant l'écartement de la tuyère par rapport au moule est comprise entre 0 et 200 ms ;
- la consigne de temps pilotant l'écartement de la tuyère est déterminée par un opérateur de l'unité de fabrication ;
- la consigne de temps pilotant l'écartement de la tuyère est déterminée par un automate de l'unité de fabrication, en fonction d'une mesure de bruit réalisée dans l'unité de fabrication ;

D'autres caractéristiques et avantages de l'invention apparaîtront plus clairement à la lecture de la description, à comprendre à titre d'exemple illustratif et non limitatif, et des dessins annexés parmi lesquels :

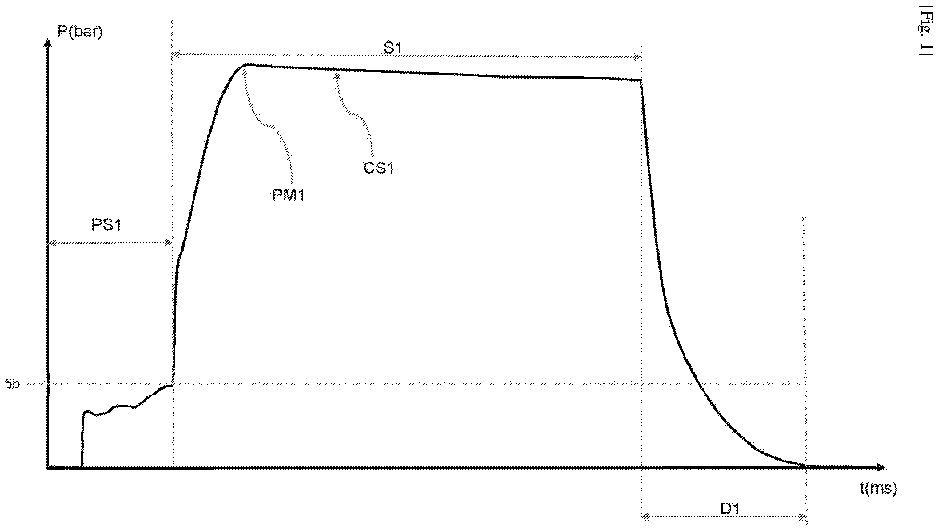

- [Fig. 1] est une vue schématique illustrant une courbe de soufflage d'un récipient selon un procédé standard de fabrication dans un moule froid ;

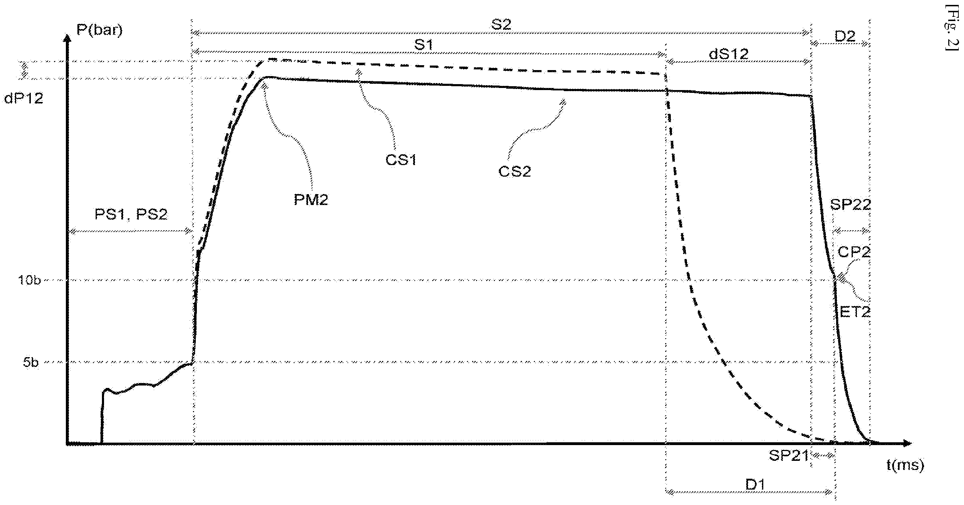

- [Fig. 2] est une vue schématique illustrant une courbe de soufflage d'un récipient selon un procédé standard de fabrication et, en superposition, une courbe de soufflage d'un récipient selon la première alternative du procédé de fabrication selon l'invention ;

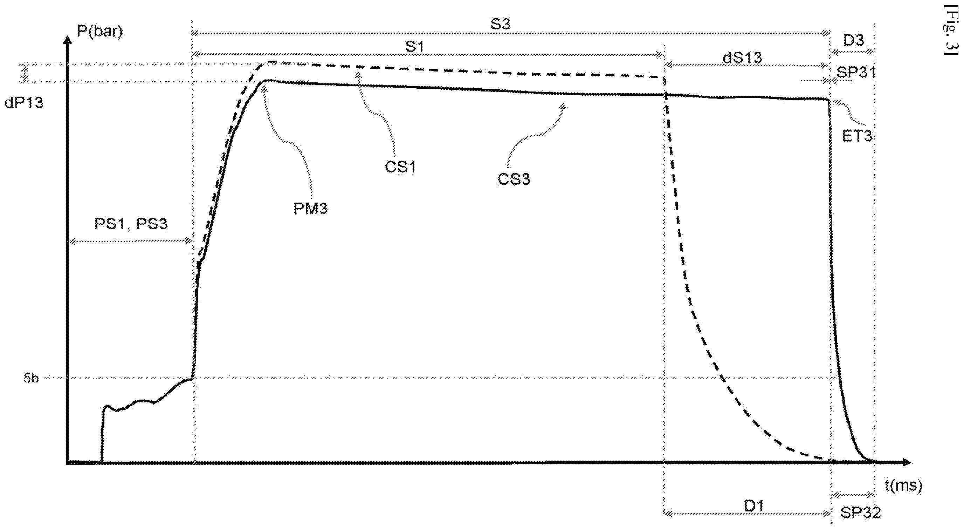

- [Fig. 3] est une vue schématique illustrant une courbe de soufflage d'un récipient selon un procédé standard de fabrication et, en superposition, une courbe de soufflage d'un récipient selon la seconde alternative du procédé de fabrication selon l'invention, dans le cas où l'écartement de la tuyère est initié immédiatement après l'achèvement de la phase de soufflage ;

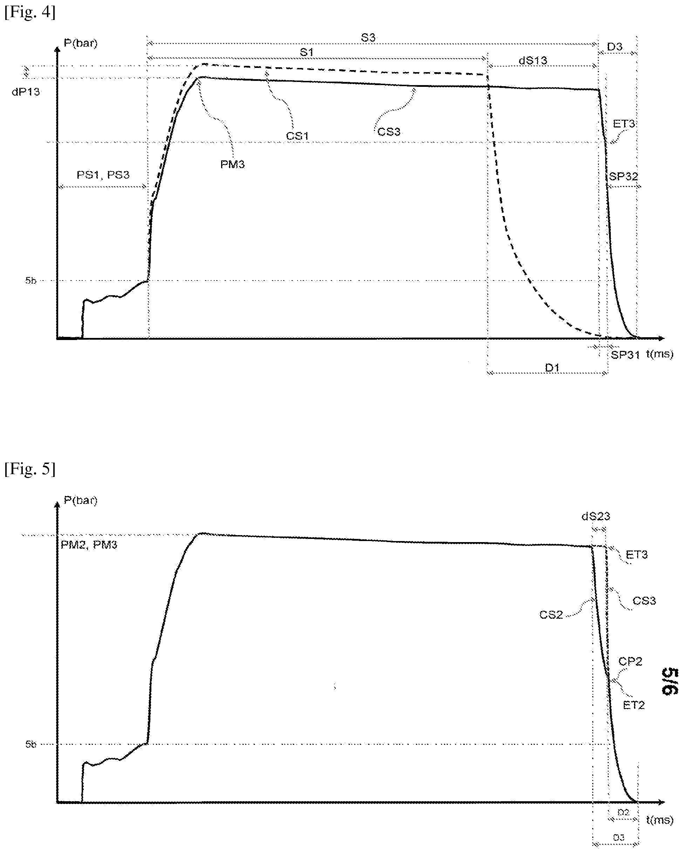

- [Fig. 4] est une vue schématique illustrant une courbe de soufflage d'un récipient selon un procédé standard de fabrication et, en superposition, une courbe de soufflage d'un récipient selon la seconde alternative du procédé de fabrication selon l'invention, dans le cas où l'écartement de la tuyère est initié avec un délai après la fin du soufflage (soit avec un temps entre la fin du soufflage et le début de l'écartement de la tuyère strictement supérieur à 0) ;
- [Fig. 5] est une vue schématique illustrant une courbe de soufflage d'un récipient selon la première alternative du procédé de fabrication selon l'invention et, en superposition, une courbe de soufflage d'un récipient selon la seconde alternative du procédé de fabrication selon l'invention, dans le cas où l'écartement de la tuyère est initié avec un délai après la fin du soufflage (soit avec un temps entre la fin du soufflage et le début de l'écartement de la tuyère supérieur à 0).

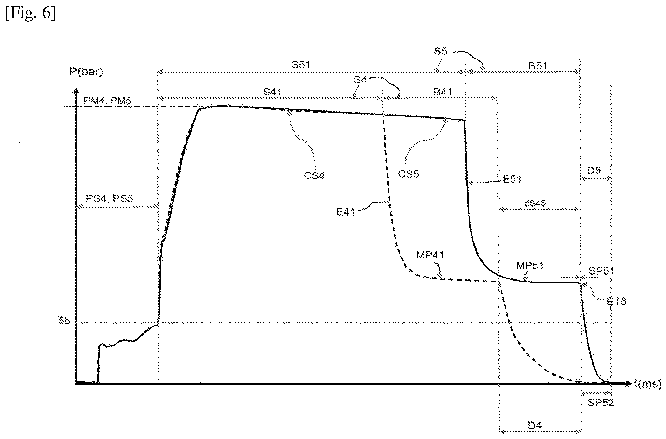

- [Fig. 6] est une vue schématique illustrant une courbe de soufflage d'un récipient fabriqué dans un moule chaud sans la mise en œuvre de l'invention et, en superposition, une courbe de soufflage d'un récipient fabriqué dans un moule chaud, en mettant en œuvre l'invention.

La figure 1 illustre une première courbe de soufflage CS1 d'un récipient, qui est représentative d'un cycle de fabrication (ou de formage) dit standard d'un récipient par soufflage ou étirage soufflage à partir d'une préforme en matière plastique au sein d'une unité de fabrication utilisant un ou des moules froids. Classiquement, l'unité de fabrication comprend un moule qui définit une empreinte du récipient à former et une tuyère destinée à fermer hermétiquement le moule.

Conventionnellement, une courbe de soufflage CSx (« x » définissant ici un indice de courbe) représente l'évolution de la pression (axe des ordonnées) dans un récipient en fonction du temps (axe des abscisses).

Chaque courbe de soufflage présente au moins les trois phases suivantes :
- une phase de pré-soufflage PSx.
- une phase de soufflage Sx.
- une phase de dégazage Dx.

La phase de pré-soufflage et la phase de soufflage considérées ensemble seront nommées séquence de formage.

Comme on le lira plus en détails ci-après, dans le cas de moules froids, la phase de soufflage consiste en en une simple injection de gaz haute pression. En d'autres termes, cette phase ne comprend qu'une seule étape. Par contre, dans le cas de moules chauds, la phase de soufflage comporte deux sous-phases (ou étapes successives), à savoir une sous-phase de soufflage avec l'injection de gaz haute pression suivie par une sous-phase de balayage.

Afin de simplifier la terminologie, dans la suite de la présente description et dans les revendications, par convention, on identifiera indifféremment les différentes phases et sous-phases qui seront mentionnées par leur durée. Ainsi, une "phase PSx" signifiera une phase de durée PSx ; de façon corollaire, une "durée PSx" pourra se comprendre comme signifiant une phase PSx, donc comme une phase de durée PSx.

La même convention s'appliquera aux phases Sx, aux phases Dx, aux sous-phases SPx.

La phase de pré-soufflage PSx et de la phase de soufflage Sx, comprennent une injection d'un gaz de soufflage sous pression dans la préforme, par la tuyère, afin de déformer la préforme jusqu'à épouser l'empreinte du moule et obtenir un récipient

Plus précisément, lors de la phase de pré-soufflage PSx, la pression augmente dans le récipient en formation jusqu'à une valeur limite de pré-soufflage, par exemple 5 bars tel qu'illustré sur les figures 1 à 5.

Une fois la phase de pré-soufflage PSx terminée, la phase de soufflage est initiée : la pression dans le récipient est augmentée jusqu'à atteindre la pression de soufflage qui est maintenue sensiblement constante jusqu'à la fin de la phase de soufflage. La matière plastique est ainsi amenée et maintenue plaquée contre les parois du moule à l'empreinte du récipient à fabriquer.

Comme indiqué, un étirage axial peut être réalisé lors de la séquence de formage.

Vient ensuite la phase de dégazage au cours de laquelle la pression dans le récipient décroît jusqu'à atteindre la pression atmosphérique.

Les courbes de soufflage CS1 selon un procédé de fabrication standard (figure 1), CS2 selon une première alternative du procédé selon l'invention (figures 2 et 5 ), et CS3 selon une seconde alternative du procédé selon l'invention (figures 3, 4 et 54), illustrent, à titre d'exemple non limitatif, plusieurs manières d'obtenir un cycle de fabrication d'un récipient d'une contenance de deux litres dont la durée totale est d'environ 1,4 secondes, ce qui représente une cadence unitaire de 1800 bouteilles/heure/moule.

En référence à la figure 1, la courbe de soufflage CS1 du procédé standard présente une phase de pré-soufflage PS1 se terminant lorsque la pression dans le récipient atteint environ 5 bars. La durée de cette phase peut être d'environ 200 ms.

Une fois la phase de pré-soufflage PS1 terminée, la phase de soufflage S1 débute.

Durant la phase de soufflage S1, la pression dans le récipient augmente jusqu'à atteindre la pression de soufflage PM1 (comprise entre 20 et 40 bars, de l'ordre de 22 bars dans l'exemple illustré). La pression PM1 est alors maintenue jusqu'à la fin de la phase de soufflage S1, qui dure typiquement environ 900 ms.

Enfin, la phase de dégazage D1 débute pour que la pression dans le récipient chute depuis la pression de soufflage PM1 jusqu'à atteindre la pression atmosphérique à la fin du cycle de fabrication. La phase de dégazage D1, qui dure environ 280 ms, est effectuée au travers d'un réseau de vannes et de conduits partant de la tuyère de soufflage et aboutissant à un silencieux d'échappement.

Comme illustré sur la figure 2, la courbe de soufflage CS2, selon la première alternative du procédé de fabrication selon l'invention, présente une phase de pré-soufflage PS2 se terminant lorsque la pression dans le récipient atteint environ 5 bars sur une durée comparable à celle de la figure 1, soit d'environ 200 ms.

Une fois le pré-soufflage PS2 terminé, la phase de soufflage S2 débute.

Durant la phase de soufflage S2, la pression dans le récipient augmente jusqu'à atteindre une pression de soufflage PM2 comprise environ entre 20 bars et 40 bars (d'une vingtaine de bars dans l'exemple illustré). Cette pression de soufflage PM2 est alors maintenue jusqu'à la fin de la phase de soufflage S2 qui dure environ 1120 ms.

Enfin la phase de dégazage D2 débute pour que la pression dans le récipient chute de la pression de soufflage PM2 jusqu'à atteindre la pression atmosphérique à la fin du cycle de fabrication. La phase de dégazage dure donc environ 130 ms.

La phase de dégazage D2 de cette première alternative du procédé selon l'invention comprend une première sous-phase SP21 et une deuxième sous-phase SP22.

La première sous-phase SP21 est initiée à la fin de la phase de soufflage S2. Durant cette première sous-phase SP21, le gaz sous pression dans le récipient formé est évacué du récipient par un réseau de vannes et de conduits partant de la tuyère de soufflage et aboutissant à un silencieux d'échappement, comme dans le cas d'un procédé classique, tel que celui illustré par la figure 1.

La première sous-phase SP21 prend avantageusement fin lorsque la pression dans le récipient est située entre 14 bars et 3 bars.

Dans l'exemple illustré sur la figure 2, la première sous-phase SP21 a une durée d'environ 60 ms.

A l'issue de la première sous-phase SP21, la deuxième sous-phase SP22 est initiée. Durant cette deuxième sous-phase SP22, le gaz sous pression restant dans le récipient formé est évacué du récipient directement vers l'extérieur en provoquant un écartement ET2 de la tuyère par rapport au moule. L'écartement de la tuyère est déclenché lorsque la pression résiduelle dans le récipient atteint la valeur d'une consigne de pression CP2.

La consigne de pression CP2 peut être fixée entre 14 bars et 3 bars, par exemple à 10 bars.

Ainsi, selon cette première alternative du procédé, dans laquelle l'écartement de la tuyère est initié après que le dégazage ait débuté par le circuit standard de dégazage, l'écartement de la tuyère par rapport au moule peut donc ainsi être initié au choix de l'opérateur de l'unité de fabrication dans une plage de pression intermédiaire comprise entre 14 bars et 3 bars durant la phase de dégazage du récipient.

Un écartement de la tuyère lorsque la pression dans le récipient formé est supérieure à 14 bars risquerait de provoquer des nuisances sonores, qu'il conviendrait de compenser avec un équipement approprié, bien que l'efficacité d'un écartement à une pression supérieure, voire immédiatement après la fin de la phase de soufflage (soit à la fin de la séquence de formage), serait réelle. En effet, la mise à l'air libre de l'intérieur du récipient provoque une détente immédiate vers l'atmosphère du gaz contenu dans le récipient, ce qui génère un bruit de détente dont l'intensité est proportionnelle au volume de l'emballage dégazé et à la pression interne du récipient lors de la mise à l'air libre.

A la pression de 14 bars (environ), il existe un équilibre entre la durée du dégazage et les nuisances sonores. En effet, l'écartement de la tuyère par rapport au moule provoque une détente brutale du gaz sous pression dans le récipient formé. A cette détente est associée une nuisance sonore importante. La nuisance sonore est dépendante de la pression dans le récipient et du volume de gaz associé au moment de la mise à l'air libre, si bien que, plus la pression est importante plus la nuisance sonore est importante. Ainsi, on a constaté que, au-delà de 14 bars, la nuisance sonore provoquée par l'écartement de la tuyère par rapport au moule devient trop importante, à tel point que les solutions visant à réduire ses nuisances sonores pour répondre aux normes de sécurité du monde industriel pourraient devenir complexes ou coûteuses dans leur mise en œuvre. De préférence, la valeur de consigne sera choisie autour de 12 bars car, à ce niveau, le gain sur la durée du dégazage comparativement à un mode de dégazage classique reste très important. Des essais réalisés avec des récipients de 2 litres ont mis en évidence qu'un écartement provoqué à 12 bars permet de réduire de plus de 40% la durée du dégazage par rapport à un procédé de l'art antérieur alors qu'un écartement tuyère initié dès la fin de la séquence de formage permet quant à lui de réduire d'un peu plus de 50% la durée du dégazage par rapport à un procédé de l'art antérieur. Le gain obtenu avec un écartement initié à une pression autour de 12 bars sera donc privilégié sur celui initié dès la fin de la séquence de formage, car très proche en terme de gain, et moins contraignant sur la gestion des nuisances sonores. Toutefois, de préférence, des systèmes visant à réduire le bruit induit par ce dégazage seront avantageusement disposés autour des moules de soufflage.

En dessous de la pression de 3 bars, l'avantage d'un écartement de la tuyère devient faible, voire inexistant. En effet, lors d'un dégazage, la pression décroit d'autant plus rapidement que la pression initiale est élevée. Autrement dit, à débit d'évacuation de pression donné, le différentiel de pression atteint lors d'une phase de dégazage pendant un intervalle de temps donné sera plus important pour une pression initiale élevée (entre 14 et 40 bars) que pour une pression initiale basse (inférieure à 3 bars).

En comparaison avec la courbe de soufflage CS1 du procédé standard, illustrée en traits interrompus sur cette figure 2, on constate les points suivants.

Premièrement, la durée de la phase de soufflage S2 de cette première alternative du procédé selon l'invention est supérieure à la durée de la phase de soufflage S1 du procédé standard.

En effet, la phase de soufflage S2 de la première alternative du procédé selon l'invention dure 1120 ms alors que la phase de soufflage S1 du procédé standard ne dure que 900 ms.

La différence DS12 entre la durée de la phase de soufflage S2 de la première alternative du procédé selon l'invention et celle de la phase de soufflage S1 du procédé standard est donc de 220 ms.

La valeur de cette différence correspond à l'augmentation, résultant du procédé de fabrication selon l'invention (courbe de soufflage CS2), du temps de maintien de la matière plastique contre les parois du moule, qui permet d'obtenir un récipient présentant de meilleures propriétés mécaniques qu'avec un procédé de fabrication standard (courbe de soufflage CS1).

Deuxièmement, la pression de soufflage PM2 nécessaire lors de la mise en œuvre de la première alternative du procédé selon l'invention est inférieure à la pression de soufflage PM1 du procédé standard. En effet l'augmentation du temps de maintien S2 permet de conserver ou d'améliorer la prise d'empreinte tout en réduisant le besoin d'avoir une pression de soufflage élevée, d'où l'emploi d'une pression de soufflage PM2 inférieure.

En effet, un même type de récipient nécessitant une pression de soufflage PM1 de 22 bars avec un procédé standard peut être obtenu grâce au procédé de l'invention avec une pression de soufflage PM2 de 20 bars.

Le gain de 2 bars permet de réduire la consommation énergétique des unités de fabrication (pour des récipients de 2 litres, ceci correspond à 4 litres d'air comprimé économisés par récipient. Ceci représente une économie de 160 000 litres d'air par heure sur un équipement produisant 40 000 récipients par heure.

Par ailleurs les installations destinées à amener le gaz sous pression jusqu'à l'unité de fabrication peuvent présenter un allègement de dimensionnement, ce qui les rend également moins coûteuses à mettre en place et à maintenir.

Dans un mode de réalisation selon la première alternative, c'est un opérateur de l'unité de fabrication, en d'autres termes une personne en charge de son pilotage, qui fixe la consigne de pression CP2, alors que l'écartement ET2 de la tuyère est piloté automatiquement par l'automate (CPU) de l'unité de fabrication pour que celui-ci s'opère à cette valeur. Cela inclut donc évidemment l'intégration et la compensation des temps de réponses des organes (actionneurs) pilotant la tuyère dans le programme machine.

Dans un mode dit « automatique », l'automate peut également déterminer, dans un mode d'auto apprentissage, après avoir soufflé une bouteille avec une durée de dégazage conséquente pour dégazer toute la bouteille par le circuit standard, à quelle pression idéale la levée de tuyère doit avoir lieu. Dans ce mode, c'est donc l'automate qui déterminera la pression à laquelle la tuyère doit se lever pour concilier gain de temps lors de la phase de soufflage et limite de bruit acceptable. On peut donc imaginer dans ce mode la machine équipée d'un capteur indiquant le niveau de bruit associé. Une fois la valeur optimale ainsi déterminée, cette valeur de pression pour le pilotage de levée de tuyère serait donc appliquée à tous les postes de soufflage. Dans ce mode, le capteur de bruit pourrait aussi agir comme une boucle de sécurité continue et ainsi agir automatiquement sur cette consigne de pression si le niveau de bruit devait changer.

Il convient de noter que, du fait que, selon cette première alternative, l'écartement de la tuyère est provoqué lorsque la pression dans le récipient est descendue à un niveau prédéterminé, l'invention peut être aisément adaptable sur des unités de fabrication fonctionnant avec une pression de soufflage élevée (typiquement 40 bars).

En référence à la figure 3, la courbe de soufflage CS3, selon la seconde alternative du procédé selon l'invention, présente une phase de pré-soufflage PS3 se terminant lorsque la pression dans le récipient atteint environ 5 bars, à l'issue d'une durée d'environ 220 ms.

Une fois le pré-soufflage PS3 terminé, la phase de soufflage S3 débute.

Durant la phase de soufflage S3, la pression dans le récipient augmente jusqu'à atteindre une pression de soufflage PM3 de 20 bars environ. La pression de soufflage PM3 est alors maintenue jusqu'à la fin de la phase de soufflage S3. La phase de soufflage S3 dure environ 1150 ms.

Selon la mise en œuvre illustrée de cette seconde alternative, l'écartement ET3 de la tuyère est provoqué immédiatement à l'issue de la phase de soufflage (soit avec un délai SP31 fixé par l'opérateur à 0 ms), afin que la phase de dégazage D3 débute immédiatement vers l'extérieur, sans passer par des vannes ou conduits partant de la tuyère. La durée de la phase de dégazage D3 dure environ 100 ms (soit D3=SP31 +SP32, avec SP31=0).

Dans un tel cas où l'écartement est initié immédiatement après le soufflage (intervalle de temps égal à 0), la phase de dégazage est totalement réalisée grâce à l'écartement de la tuyère par rapport au moule.

Dès lors, le retour à la pression atmosphérique intervient rapidement après la phase de soufflage. Il est ainsi possible de maintenir plus longtemps la matière constitutive du récipient formé contre les parois du moule, en conservant un même temps de cycle. On augmente ainsi les caractéristiques mécaniques et la qualité de prise d'empreinte d'un récipient formé.

Toutefois, comme évoqué précédemment, lorsque la pression dans le récipient formé est supérieure à 14 bars, un écartement prématuré de la tuyère présente un inconvénient en termes de nuisances sonores, bien que l'efficacité d'un écartement précoce soit réelle. Néanmoins, il convient de noter que de telles nuisances, y compris celles provoquées lorsque la pression dans le récipient formé atteint 20 bars sont inférieures à celles qui seraient provoquées par un écartement anticipé dans le cas où la pression de soufflage atteint 40 bars, mais doivent néanmoins être atténuées avec des moyens appropriés (panneaux isolants phoniques, par exemple).

Avec un temps SP31 fixé à 0, et en comparaison avec la courbe de soufflage CS1 du procédé standard, on constate les points suivants.

Premièrement, la durée de la phase de soufflage S3 selon la seconde alternative du procédé l'invention est supérieure à la durée de la phase de soufflage S1 du procédé standard.

En effet, pour l'exemple cité pour des récipients de 2 litres, fabriqués à une cadence unitaire de 1800 bouteilles/heure/moule, la phase de soufflage S3 selon la seconde alternative du procédé de l'invention dure 1150 ms alors que la phase de soufflage S1 du procédé standard ne dure que 900 ms.

La différence de durée de soufflage DS13 entre la phase de soufflage S3 selon la seconde alternative du procédé de l'invention et la phase de soufflage S1 du procédé standard est donc de 250 ms.

Le maintien de la matière plastique contre les parois du moule permet d'obtenir un récipient présentant de meilleures propriétés mécaniques et une meilleure qualité de prise d'empreinte lors de la mise en œuvre de la seconde alternative du procédé de l'invention (courbe de soufflage CS3) qu'avec le procédé de fabrication standard (courbe de soufflage CS1). Il est intéressant de noter qu'un récipient produit à une cadence unitaire de 1800 bouteilles/heure/moule en mode standard, pourrait, en utilisant l'invention décrite en regard avec la seconde alternative avec un temps SP31 à 0 et avec une même pression de soufflage que celle utilisée en mode standard, être produit à une cadence unitaire de 2300 bouteilles/heure tout en ayant le même temps de maintien au soufflage (900 ms). Ce gain potentiel de cadence est donc extrêmement important et avantageux. A l'heure actuelle tous les fabricants, dans le but d'accélérer les cadences de production, cherchent à optimiser leurs cinématiques, mais ces gains ne se traduisent que par des optimisations de temps de soufflage de quelques millisecondes, qui au final, n'améliorent pas réellement les performances. Un gain de 250 ms, comme cité dans l'exemple décrit, est impossible à envisager par des optimisations cinématiques classiques.

Deuxièmement, pour obtenir un récipient identique sur un cycle de même durée, la pression de soufflage PM3 nécessaire dans la seconde alternative du procédé de l'invention est inférieure à la pression de soufflage PM1 qui serait nécessaire avec un procédé standard : avec l'exemple décrit, une pression de soufflage PM3 de 20 bars suffit pour produire un récipient qui nécessiterait une pression de soufflage PM1 de 22 bars avec un procédé standard. Il existe donc une différence de pression dP13 de 2 bars.

Comme dans le cas de la première alternative, une telle différence permet de réduire la consommation énergétique des unités de fabrication dans le même ordre de grandeur. Par ailleurs les installations destinées à amener le gaz sous pression jusqu'à l'unité de fabrication peuvent être simplifiées, dans la mesure où les circuits et vannes liés aux tuyères ne nécessitent plus de communication avec des circuits d'échappement, ni de silencieux, ce qui les rend également moins coûteuses à concevoir et à maintenir.

La figure 4 illustre une variante de la seconde alternative du procédé selon l'invention tel que décrit dans la figure 3. Dans cette variante, le temps SP31 fixant le temps à partir duquel l'écartement de la tuyère va être effectif est fixé à quelques millisecondes, par exemple 30 ms. En comparant avec la courbe de soufflage CS1 (procédé standard), on note plusieurs différences :
- dans l'exemple cité, pour des récipients de 2 litres à une cadence unitaire de 1800 bouteilles/heure/moule, la phase de soufflage S3 selon la seconde alternative du procédé de l'invention dure 1120 ms alors que la phase de soufflage S1 du procédé standard ne dure que 900 ms. La différence dS13 de durée de soufflage entre la phase de soufflage S3 selon la seconde alternative du procédé de l'invention et la phase de soufflage S1 du procédé standard est donc de 220 ms ;
- la seconde alternative présente l'avantage de permettre une gestion de l'écartement de la tuyère par un temps et non pas par une consigne de pression, ce qui permet une plus grande simplicité du système de mise en œuvre. En effet, cette seconde alternative ne nécessite pas d'appareillage permettant de détecter que la pression résiduelle dans le récipient atteint la valeur fixée par une consigne de pression, telle que celle CP2 décrite en regard de la figure 2. Dans ce mode, l'écartement ET3 de la tuyère est géré avec une consigne de temps SP31. Cette consigne de temps SP31 peut être déterminée par l'utilisateur ou par l'automate gérant la machine. Il est effectivement facile à partir des données renseignées que sont la consigne de pression de soufflage PM3 et le volume de l'article soufflé, de déterminer automatiquement suivant des données stockées, le temps SP31 nécessaire à pouvoir combiner un temps de soufflage optimal tout en respectant les niveaux de bruits maxima admissibles.

Le temps SP31 peut également être déterminé automatiquement par la gestion d'une boucle le liant à la mesure du niveau de bruit de la machine. Dans ce cas c'est la mesure du niveau de bruit en décibels et la consigne du seuil acceptable associé qui détermineront le temps SP31 optimal.

La figure 5 illustre la comparaison entre la courbe de soufflage CS2 de la première alternative avec une consigne de pression fixée à 10 bars et la courbe de soufflage CS3 selon la seconde alternative avec un temps SP31 à 0.

La différence entre ces deux courbes de soufflage se situe à l'initiation de leur phase de dégazage D2, D3 respective.

Plus précisément, on constate que la phase de dégazage D2 de la courbe de soufflage CS2 de la première alternative est initiée avant la phase de dégazage D3 de la seconde alternative.

Il existe donc une différence de 30 ms à l'initiation de chacune de ces deux phases de dégazage D2, D3.

Ainsi, sur la courbe de soufflage CS3 de la seconde alternative, la matière constitutive du récipient est maintenue contre les parois du moule 30 ms de plus que sur la courbe de soufflage CS2 de la première alternative.

On peut également constater que la pression devient identique pour les deux courbes de soufflage CS2, CS3 à partir de l'instant où la tuyère est écartée du moule dans la première alternative (début de la sous-phase SP22), soit approximativement lorsque la pression dans le récipient est de 10 bars. Ceci est rendu possible notamment grâce à l'écartement ET3 de la tuyère dès le début de la phase de dégazage dans le cas où la durée SP31 est fixée à 0, dans la seconde alternative, ce qui permet une chute de pression plus rapide que lorsque le gaz sous pression est évacué par la tuyère comme c'est le cas dans la première sous-phase SP21 de la première alternative.

Le gain de temps de maintien de la matière contre les parois du moule (30 ms) obtenu par la courbe de soufflage CS3 selon la seconde alternative du procédé avec un temps SP31 fixé à 0, est relativement faible pour présenter un avantage nettement supérieur à un dégazage selon la courbe de soufflage CS2 de la première alternative.

Aussi, afin de limiter l'équipement d'isolation acoustique des unités de fabrication, on privilégiera une fabrication de récipients selon la courbe de soufflage CS2 de la première alternative, ou selon la courbe de soufflage CS3 de la seconde alternative, mais avec un temps SP31 > 0, déterminé lors des réglages de l'installation de façon telle que l'écartement soit initié lorsque la pression est suffisamment basse pour que le bruit généré par la détente à l'air libre soit acceptable avec la mise en œuvre de systèmes d'absorption de bruit..

La seconde alternative peut être mise en œuvre en particulier lorsque le procédé de fabrication est destiné à des articles produits avec une pression de soufflage faible, typiquement inférieure à 20 bars. Des pressions relativement basses sont désormais utilisées grâce aux progrès récents réalisés sur les équipements de bi-orientation, sur les résines, ou encore les designs de bouteilles. Ces progrès permettent en effet de produire certains articles en dessous de 20 bars (des pressions autour de 14 bars sont de plus souvent exploitées) ; certaines résines particulières comme les polyoléfines permettent même l'emploi de des pressions de production encore plus basses (de 10 bars). Une mise à l'air libre rapide, voire immédiatement à la fin du soufflage, est alors envisageable sans tenir compte de la pression atteinte dans le récipient en fin de soufflage, dans la mesure où le bruit généré par le dégazage demeurera acceptable sans qu'il soit besoin de mettre en place des équipements complexes afin de réduire ce bruit.

En outre, dans un espace industriel entièrement automatisé pour lequel les conditions sonores acceptables sont supérieures à celles d'un espace industriel accueillant des techniciens de production, ou dans le cas où les pressions de soufflage PMx seraient très faibles (<15 bars), une fabrication de récipients selon la courbe de soufflage CS3 selon la seconde alternative du procédé avec un temps SP31 fixé à 0, pourra être préférée.

Sur la figure 6, sont représentées, de façon superposée, deux courbes de soufflage, CS4 et CS5, l'une CS4, en traits interrompus, étant la courbe de soufflage d'un procédé faisant appel à un moule chaud selon l'art antérieur et l'autre CS5, en traits pleins, étant la courbe de soufflage d'un procédé faisant appel à un moule chaud selon l'invention.

Le procédé illustré par la courbe CS4 comprend une séquence de formage par étirage-soufflage, incluant une phase de pré-soufflage PS4 et une phase de soufflage S4. La séquence de formage est suivie par une phase de dégazage D4.

Lors de la séquence de formage, la phase de présoufflage PS4 se termine lorsque la pression dans le récipient atteint environ 5 bars. La durée de cette phase est comparable avec celle des procédés antérieurs (comprise typiquement entre 100 ms et 250 ms).

Une fois le pré-soufflage PS4 terminé, la phase de soufflage S4 débute.

La phase de soufflage S4 comporte une première sous-phase, dite sous-phase de soufflage S41, lors de laquelle un gaz sous haute pression de soufflage est injecté, de sorte que la pression dans le récipient augmente jusqu'à atteindre une pression de soufflage PM4 de l'ordre de 40 bars environ. La pression de soufflage PM4 est alors maintenue jusqu'à la fin de la sous-phase de soufflage S4. La phase de soufflage S4 dure environ 1150 ms, avec une sous-phase S41 de 850 ms A l'issue de la sous-phase de soufflage S41 commence une sous-phase de balayage B41, qui consiste à provoquer un échappement (portion E41 de la courbe CS4) contrôlé du gaz contenu dans le récipient, jusqu'à atteindre une pression subsistante MP41 (sur la courbe CS4) à l'intérieur du récipient (la pression MP41 est généralement comprise entre 8 bars et 12 bars). Puis, après que la pression subsistante MP41 ait été atteinte, du gaz continue à être injecté par un ou plusieurs trous ménagés dans la tige d'étirage, pendant que l'échappement contrôlé continue, de façon à maintenir la pression subsistante MP41 pendant une période de l'ordre de 300 ms

Puis, à l'issue de la sous-phase de balayage B41 (en d'autres termes à l'issue de la phase de soufflage S4), la phase de dégazage D4 (comprise typiquement entre 140 et 200 ms) débute pour que la pression dans le récipient chute depuis la pression subsistante MP41 jusqu'à atteindre la pression atmosphérique à la fin du cycle de fabrication. La phase de dégazage B41 est effectuée au travers d'un réseau de vannes et de conduits partant de la tuyère de soufflage et aboutissant à un silencieux d'échappement.

L'invention, lorsqu'elle est appliquée à des moules chauds, aboutit à une courbe de soufflage CS5, qui, comme la courbe CS4, comprend une séquence de formage par étirage-soufflage, incluant une phase de pré-soufflage PS5 et une phase de soufflage S5. La séquence de formage est suivie par une phase de dégazage D5.

Lors de la séquence de formage, la phase de présoufflage PS5 se termine lorsque la pression dans le récipient atteint environ 5 bars. La durée de cette phase est comparable avec celle des procédés antérieurs (comprise typiquement entre 100 ms et 250 ms).

Une fois le pré-soufflage PS5 terminé, la phase de soufflage S5 débute.

La phase de soufflage S5 comporte une première sous-phase, dite sous-phase de soufflage S51, lors de laquelle un gaz sous haute pression de soufflage est injecté, de sorte que la pression dans le récipient augmente jusqu'à atteindre une pression de soufflage PM5 de l'ordre de 40 bars environ. La pression de soufflage PM5 est alors maintenue jusqu'à la fin de la sous-phase de soufflage S51. La phase de soufflage S5 dure environ 1290 ms. A l'issue de la sous-phase de soufflage S51 commence une sous-phase de balayage B51, qui consiste à provoquer un échappement (portion E51 de la courbe CS5) contrôlé du gaz contenu dans le récipient, jusqu'à atteindre une pression subsistante MP51 (sur la courbe CS5) à l'intérieur du récipient, comprise entre 8 bars et 12 bars. Puis, après que la pression subsistante MP51 ait été atteinte, du gaz continue à être injecté par un ou plusieurs trous ménagés dans la tige d'étirage, pendant que l'échappement contrôlé continue, de façon à maintenir la pression subsistante MP51 pendant une période de l'ordre de 400 ms

Selon l'invention, la phase de dégazage D5, afin de faire chuter la pression interne du récipient de la pression subsistante à la pression atmosphérique, est initiée en provoquant un écartement ET5 de la tuyère immédiatement à l'issue de la phase de soufflage S5, autrement dit à l'issue de la sous-phase de balayage B51 (soit avec un délai SP51 fixé par l'opérateur à 0 ms), afin que la phase de dégazage D5 débute immédiatement vers l'extérieur, sans passer par des vannes ou conduits partant de la tuyère. La durée de la phase de dégazage D5 dure environ 70 ms (soit D5=SP51+SP52, avec SP51=0).

En effet, dans ce cas particulier des moules chauds, la pression subsistante MP51, puisqu'elle est comprise entre 8 et 12 bars est telle qu'elle permet un dégazage immédiat (la plage de pression de 8 à 12 bars englobe la plage de pression intermédiaire, comprise entre 14 et 3 bars).

Ainsi, puisque l'écartement ET5 est initié immédiatement après le soufflage (intervalle de temps égal à 0), la phase de dégazage est totalement réalisée grâce à l'écartement de la tuyère par rapport au moule.

Dès lors, le retour à la pression atmosphérique intervient rapidement après la phase de soufflage S5. Il est ainsi possible de maintenir plus longtemps la matière constitutive du récipient formé contre les parois du moule, en conservant un même temps de cycle. On augmente ainsi les caractéristiques mécaniques et la qualité de prise d'empreinte d'un récipient formé.

Avec un temps SP51 fixé à 0, et en comparaison avec la courbe de soufflage CS4 du procédé à moules chauds de l'art antérieur, on constate les points suivants.

Premièrement, la durée de la phase de soufflage S5 selon l'invention est supérieure à la durée de la phase de soufflage S4 du procédé à moules chauds de l'art antérieur.

En effet, pour l'exemple cité pour des récipients de 0.5 litres, fabriqués à une cadence unitaire de 1600 bouteilles/heure/moule, la phase de soufflage S5 selon l'invention dure 1290 ms alors que la phase de soufflage S4 du procédé à moules chauds de l'art antérieur ne dure que 1150 ms.

La différence de durée de soufflage dS45 entre la phase de soufflage S5 selon l'invention et la phase de soufflage S4 du procédé à moules chauds de l'art antérieur est donc de 140 ms.

Le maintien plus long de la matière plastique contre les parois du moule permet d'obtenir un récipient présentant de meilleures propriétés mécaniques et une meilleure qualité de prise d'empreinte lors de la mise en œuvre l'invention (courbe de soufflage CS5) qu'avec le procédé de fabrication à moules chauds de l'art antérieur (courbe de soufflage CS4).

## Revendications

1. Procédé de fabrication d'un récipient par soufflage à partir d'une préforme en matière plastique au sein d'une unité de fabrication, l'unité de fabrication comprenant un moule définissant une empreinte du récipient à former et une tuyère destinée à fermer hermétiquement le moule, le procédé de fabrication comprenant :
- une séquence de formage par soufflage avec une phase de soufflage (S2 ; S3 ; S5) comprenant au moins l'injection et le maintien d'un gaz sous pression dans la préforme, par la tuyère, afin de déformer la préforme jusqu'à épouser l'empreinte du moule et obtenir un récipient :
- une phase de dégazage (D2 ; D3 ; D5) du récipient formé, consistant à faire sortir le gaz contenu dans le récipient à la fin la séquence de formage, afin de mettre l'intérieur du récipient à la pression atmosphérique,
**caractérisé en ce que** lors de la phase de dégazage (D2 ; D3 ; D5), il est provoqué un écartement (ET2 ; ET3 ; ET5) de la tuyère par rapport au moule afin de rompre la fermeture hermétique pour mettre en communication fluidique directe l'intérieur du récipient avec l'atmosphère, l'écartement de la tuyère étant initié :
- après le commencement de la phase de dégazage (D2 ; D3), lorsque la pression à l'intérieur du récipient a chuté et a atteint une pression intermédiaire, inférieure à la pression à la fin de la séquence de formage et comprise entre 14 et 3 bars,
ou
après achèvement de la phase de soufflage (S2 ; S3 ; S5), à un instant prédéterminé survenant dans un intervalle de temps compris entre 0 et 200 ms après l'arrêt de l'injection de gaz dans le récipient.

2. Procédé de fabrication selon la revendication 1, **caractérisé en ce que** la séquence de formage par soufflage est accompagnée d'un étirage axial de la préforme.

3. Procédé de fabrication selon la revendication 2, **caractérisé en ce qu'**il est mis en œuvre dans un moule chaud et **en ce qu'**il comporte une sous-phase de balayage (B51) qui survient au cours de la phase de soufflage (S5) immédiatement avant le dégazage (D5) et au cours de laquelle un échappement contrôlé de gaz est provoqué et un gaz de balayage est injecté dans le récipient et à l'issue de laquelle il subsiste dans le récipient une pression (MP51) comprise entre 8 et 12 bars, et l'écartement (ET5) de la tuyère est initié immédiatement à la fin de la sous-phase de dégazage (D5), à l'arrêt de l'injection de gaz de balayage dans le récipient.

4. Procédé de fabrication selon la revendication 1 ou 2, **caractérisé en ce que** l'écartement (ET2) de la tuyère par rapport au moule est initié durant la phase de dégazage (D2) du récipient après que le dégazage ait débuté par un circuit de dégazage de l'unité de fabrication lorsque la pression intermédiaire dans le récipient formé atteint la valeur d'une consigne de pression (CP2).

5. Procédé de fabrication selon la revendication 4, **caractérisé en ce que** la consigne de pression (CP2) pilotant l'écartement de la tuyère (ET2,) par rapport au moule est fixée entre 14 et 3 bars.

6. Procédé de fabrication selon l'une des revendications 4 ou 5, **caractérisé en ce que** la consigne de pression (CP2) pilotant l'écartement de la tuyère (ET2) est déterminée par un opérateur de l'unité de fabrication, en d'autres termes une personne en charge de son pilotage.

7. Procédé de fabrication selon l'une des revendications 4 à 6, **caractérisé en ce que** la consigne de pression (CP2) pilotant l'écartement (ET2) de la tuyère est déterminée par un automate de l'unité de fabrication, en fonction de données de pression de soufflage (PM2) et du volume d'article produit, ou d'une mesure de bruit.

8. Procédé de fabrication selon la revendication 1 ou 2, **caractérisé en ce que** l'écartement (ET3) de la tuyère par rapport au moule est piloté après achèvement de la phase de soufflage et après l'arrêt de l'injection de gaz de dans le récipient, par une consigne de temps (SP3).

9. Procédé de fabrication selon la revendication 8, **caractérisé en ce que** la consigne de temps (SP31) pilotant l'écartement de la tuyère (ET3) par rapport au moule est comprise entre 0 et 200 ms.

10. Procédé de fabrication selon l'une des revendications 8 ou 9, **caractérisé en ce que** la consigne de temps (SP31) pilotant l'écartement (ET3) de la tuyère est déterminée par un opérateur de l'unité de fabrication, en d'autres termes une personne en charge de son pilotage.

11. Procédé de fabrication selon l'une des revendications, 8 ou 9, **caractérisé en ce que** la consigne de temps (SP31) pilotant l'écartement (ET3) de la tuyère est déterminée par un automate de l'unité de fabrication, en fonction d'une mesure de bruit réalisée dans l'unité de fabrication.

## Patentansprüche

1. Verfahren zur Herstellung eines Behälters durch Blasen aus einem Vorformling aus Kunststoff in einer Herstellungseinheit, wobei die Herstellungseinheit ein Werkzeug umfasst, das ein Formnest für den zu formenden Behälter definiert, und eine Düse, die dazu bestimmt ist, das Werkzeug hermetisch zu verschließen, wobei das Herstellungsverfahren umfasst:
- eine Sequenz des Blasformens mit einer Blasphase (S2; S3; S5), die mindestens das Einleiten und das Halten eines Gases unter Druck in dem Vorformling, durch die Düse, umfasst, um den Vorformling zu verformen, bis er sich an das Formnest des Werkzeugs anlegt und ein Behälter erhalten wird,
- eine Phase des Entgasens (D2; D3; D5) des geformten Behälters, die darin besteht, das in dem Behälter enthaltene Gas am Ende der Formungssequenz austreten zu lassen, um den Innenraum des Behälters auf atmosphärischen Druck zu bringen,
**dadurch gekennzeichnet, dass** bei der Entgasungsphase (D2; D3; D5) ein Beabstanden (ET2; ET3; ET5) der Düse in Bezug auf das Werkzeug bewirkt wird, um das hermetische Verschließen zu unterbrechen, um den Innenraum des Behälters in direkte Fluidverbindung mit der Atmosphäre zu bringen, wobei das Beabstanden der Düse initiiert wird:
- nach dem Beginn der Entgasungsphase (D2; D3), wenn der Druck im Innenraum des Behälters abgefallen ist und einen Zwischendruck erreicht hat, der geringer als der Druck am Ende der Formungssequenz ist und zwischen 14 und 3 bar beträgt,
oder
nach Abschluss der Blasphase (S2; S3; S5), zu einem vorbestimmten Zeitpunkt, der in einem Zeitintervall zwischen 0 und 200 ms nach dem Stoppen der Gaseinleitung in den Behälter eintritt.

2. Herstellungsverfahren nach Anspruch 1, **dadurch gekennzeichnet, dass** die Blasformungssequenz mit einem axialen Strecken des Vorformlings einhergeht.

3. Herstellungsverfahren nach Anspruch 2, **dadurch gekennzeichnet, dass** es in einem heißen Werkzeug durchgeführt wird und dass es eine Spül-Teilphase (B51) umfasst, die während der Blasphase (S5) unmittelbar vor dem Entgasen (D5) eintritt und während der ein kontrolliertes Entweichen von Gas bewirkt wird und ein Spülgas in den Behälter eingeleitet wird und nach der in dem Behälter ein Druck (MP51) zwischen 8 und 12 bar fortbesteht, und das Beabstanden (ET5) der Düse unmittelbar am Ende der Spül-Teilphase (D5), beim Stoppen des Einleitens von Spülgas in den Behälter, initiiert wird.

4. Herstellungsverfahren nach Anspruch 1 oder 2, **dadurch gekennzeichnet, dass** das Beabstanden (ET2) der Düse in Bezug auf das Werkzeug während der Entgasungsphase (D2) des Behälters initiiert wird, nachdem das Entgasen durch einen Entgasungskreislauf der Herstellungseinheit begonnen hat, wenn der Zwischendruck in dem geformten Behälter den Wert eines Drucksollwerts (CP2) erreicht.

5. Herstellungsverfahren nach Anspruch 4, **dadurch gekennzeichnet, dass** der Drucksollwert (CP2), der das Beabstanden der Düse (ET2,) in Bezug auf das Werkzeug steuert, zwischen 14 und 3 bar festgelegt wird.

6. Herstellungsverfahren nach einem der Ansprüche 4 oder 5, **dadurch gekennzeichnet, dass** der Drucksollwert (CP2), der das Beabstanden der Düse (ET2) steuert, von einem Bediener der Herstellungseinheit bestimmt wird, mit anderen Worten, einer für ihre Steuerung zuständigen Person.

7. Herstellungsverfahren nach einem der Ansprüche 4 bis 6, **dadurch gekennzeichnet, dass** der Drucksollwert (CP2), der das Beabstanden (ET2) der Düse steuert, von einem Steuerungsgerät der Herstellungseinheit in Abhängigkeit von Blasdruckdaten (PM2) und vom produzierten Artikelvolumen oder von einer Geräuschmessung bestimmt wird.

8. Herstellungsverfahren nach Anspruch 1 oder 2, **dadurch gekennzeichnet, dass** das Beabstanden (ET3) der Düse in Bezug auf das Werkzeug nach Abschluss der Blasphase und nach dem Stoppen des Einleitens von Gas in den Behälter durch einen Zeitsollwert (SP3) gesteuert wird.

9. Herstellungsverfahren nach Anspruch 8, **dadurch gekennzeichnet, dass** der Zeitsollwert (SP31), der das Beabstanden der Düse (ET3) in Bezug auf das Werkzeug steuert, zwischen 0 und 200 ms beträgt.

10. Herstellungsverfahren nach einem der Ansprüche 8 oder 9, **dadurch gekennzeichnet, dass** der Zeitsollwert (SP31), der das Beabstanden (ET3) der Düse steuert, von einem Bediener der Herstellungseinheit der Herstellungseinheit bestimmt wird, mit anderen Worten, einer für ihre Steuerung zuständigen Person.

11. Herstellungsverfahren nach einem der Ansprüche 8 oder 9, **dadurch gekennzeichnet, dass** der Zeitsollwert (SP31), der das Beabstanden (ET3) der Düse steuert, von einem Steuerungsgerät der Herstellungseinheit in Abhängigkeit von einer in der Herstellungseinheit ausgeführten Geräuschmessung bestimmt wird.

## Claims

1. Process for production of a container by blowing starting from a pre-form made of plastics material within a production unit, the production unit comprising a mold defining an impression for the container to be formed, and a nozzle which is designed to close the mold hermetically, the production process comprising:
- a sequence of forming by blowing, with a blowing phase (S2; S3; S5) comprising at least the injection and maintenance of a gas under pressure in the pre-form, via the nozzle, in order to deform the pre-form until it matches the impression of the mold, and obtain a container;
- a phase of degassing (D2; D3; D5) of the container formed, consisting of discharging the gas contained in the container at the end of the forming sequence, in order to take the interior of the container to atmospheric pressure,
**characterized in that**, during the degassing phase (D2; D3; D5), the nozzle is spaced (ET2; ET3; ET5) from the mold in order to interrupt the hermetic closure, so as to put the interior of the container into direct fluid communication with the atmosphere, the spacing of the nozzle being begun:
- after the beginning of the degassing phase (D2; D3), when the pressure in the interior of the container has dropped and has reached an intermediate pressure which is lower than the pressure at the end of the forming sequence, and is between 14 and 3 bars;
or
after completion of the blowing phase (S2; S3; S5), at a predetermined instant which takes place within an interval of time of between 0 and 200 ms after the stoppage of the injection of gas into the container.

2. Production process according to Claim 1, **characterized in that** the sequence of forming by blowing is accompanied by axial stretching of the pre-form.

3. Production process according to Claim 2, **characterized in that** it is implemented in a hot mold, and **in that** it comprises a sweeping sub-phase (B51) which takes place during the blowing phase (S5) immediately before the degassing (D5), and during which controlled escape of gas is caused and a sweeping gas is injected into the container, and upon completion of which sub-phase a pressure (MP51) of between 8 and 12 bars remains in the container, and the spacing (ET5) of the nozzle is begun immediately at the end of the degassing sub-phase (D5), upon stoppage of the injection of sweeping gas into the container.

4. Production process according to Claim 1 or 2, **characterized in that** the spacing (ET2) of the nozzle relative to the mold is begun during the phase of degassing (D2) of the container, after the degassing has been started by a degassing circuit of the production unit, when the intermediate pressure in the container formed reaches the value of a set pressure (CP2).

5. Production process according to Claim 4, **characterized in that** the set pressure (CP2) which controls the spacing of the nozzle (ET2) from the mold is set to between 14 and 3 bars.

6. Production process according to one of Claims 4 or 5, **characterized in that** the set pressure (CP2) which controls the spacing of the nozzle (ET2) is determined by an operator of the production unit, in other words by a person in charge of its control.

7. Production process according to one of Claims 4 to 6, **characterized in that** the set pressure (CP2) which controls the spacing (ET2) of the nozzle is determined by an automaton of the production unit, according to data of pressure of blowing (PM2) and of the volume of the article produced, or according to a noise measurement.

8. Production process according to Claim 1 or 2, **characterized in that** the spacing (ET3) of the nozzle from the mold is controlled after completion of the blowing phase, and after stoppage of the injection of gas into the container, by means of a set time (SP3).

9. Production process according to Claim 8, **characterized in that** the set time (SP31) which controls the spacing (ET3) of the nozzle relative to the mold is between 0 and 200 ms.

10. Production process according to one of Claims 8 or 9, **characterized in that** the set time (SP31) which controls the spacing (ET3) of the nozzle is determined by an operator of the production unit, in other words by a person in charge of its control.

11. Production process according to one of Claims 8 or 9, **characterized in that** the set time (SP31) which controls the spacing (ET3) of the nozzle is determined by an automaton of the production unit, according to a noise measurement carried out in the production unit.
